Europäisches Patentamt

European Patent Office

Office européen des brevets

(11) Numéro de publication: **0 304 882 B1**

(12) **FASCICULE DE BREVET EUROPEEN**

(45) Date de publication de fascicule du brevet: **07.10.92** (51) Int. Cl.⁵: **B23H 7/02**, F16J 15/56

(21) Numéro de dépôt: **88113745.9**

(22) Date de dépôt: **24.08.88**

(54) **Machine pour découper par électroérosion.**

(30) Priorité: **28.08.87 CH 3307/87**

(43) Date de publication de la demande:
**01.03.89 Bulletin 89/09**

(45) Mention de la délivrance du brevet:
**07.10.92 Bulletin 92/41**

(84) Etats contractants désignés:
**CH DE ES FR GB IT LI SE**

(56) Documents cités:
**EP-A- 133 160**
**EP-A- 0 264 716**
**US-A- 4 647 747**

(73) Titulaire: **CHARMILLES TECHNOLOGIES S.A.**
**8-10, rue du Pré-de-la-Fontaine Zone industrielle de Satigny**
**CH-1217 Meyrin 1(CH)**

(72) Inventeur: **Babel, Bernard**
**Chemin Vert-Pré**
**CH-1213 Petit-Lancy(CH)**
Inventeur: **Lehmann, Hans**
**Chemin du Soujet 6**
**CH-1234 Vessy(CH)**
Inventeur: **Josserand, Joseph**
**Route du Suet**
**F-74350 Cruseilles(FR)**
Inventeur: **Ruffin, Jean André**
**La Bergue**
**F-74380 Bonne(FR)**

(74) Mandataire: **Hugelin, Christiane**
**c/o CHARMILLES TECHNOLOGIES SA Case**
**postale 373**
**CH-1217 Meyrin 1(CH)**

## Description

La présente invention a trait à une machine pour découper par décharges érosives une pièce-électrode au moyen d'une fil-électrode se déroulant entre deux têtes de guidage, montées chacune sur un bras. L'un au moins de ces bras traverse l'une des parois d'un bac étanche contenant un liquide d'usinage grâce à au moins une ouverture ménagée dans cette paroi. Un dispositif étanche empêche le liquide de s'écouler par cette ouverture tout en permettant au bac et au bras-traversant de se déplacer relativement l'un à l'autre dans deux directions orthogonales. La pièce-électrode est en général immergée dans le liquide d'usinage et reste solidaire du bac. Ce dernier est susceptible de se déplacer grâce à une table à mouvements croisés. Il s'agit en général d'un bac en forme de parallélépipède, se déplaçant selon deux directions orthogonales, parallèles à sa base, et parallèles, l'une à l'axe du bras-traversant (direction Y) et l'autre à la paroi comportant l'ouverture par laquelle passe ce bras (direction X).

On connaît de tels dispositifs étanches permettant de résister, sans déformation empêchant leur fonctionnement, à la pression exercée par le liquide contre les parois du bac, en particulier celui décrit dans le brevet européen EP 133 160. Il est constitué par une plaque percée d'un orifice laissant passer le bras-traversant, le long de laquelle se déplace la paroi du bac dans laquelle est ménagée l'ouverture traversée par le bras et profilée de manière à permettre un déplacement transversal du bac par rapport à ce bras. La surface de cette plaque est suffisante pour lui permettre de masquer l'ouverture de cette paroi, quelle que soit la position de cette dernière. Au moins un joint est disposé entre la plaque et la paroi et au moins un autre joint est prévu entre la plaque et le bras. L'ensemble constitué par la plaque et le joint plaque-bras peut coulisser le long de ce bras.

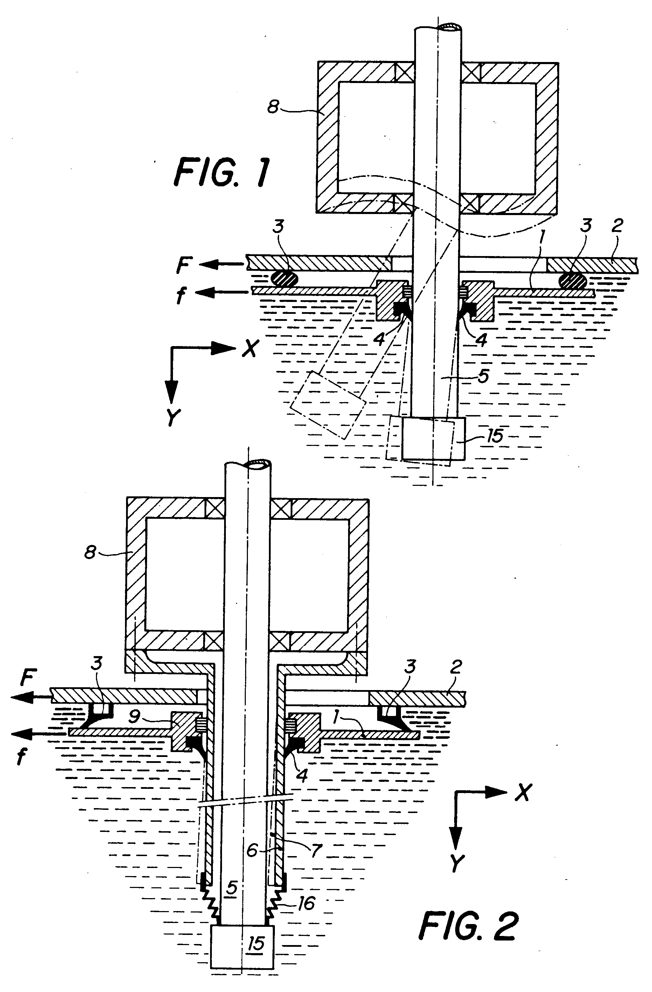

Toutefois, par suite de la pression exercée par le liquide d'usinage sur cette plaque, des forces apparaissent qui viennent empêcher le libre déplacement de la paroi au niveau des joints. En effet, par suite de la pression exercée sur la plaque, celle-ci est poussée contre la paroi du bac en comprimant le joint plaque-paroi. Des forces de frottement sont ainsi créés entre la paroi et la plaque lorsque l'une coulisse le long de l'autre. Dans le cas de la machine décrite dans la présente invention, où c'est le bac qui se déplace, le bras-traversant restant fixe, c'est donc la paroi qui coulisse parallèlement à la plaque, celle-ci restant immobile, mais on peut envisager le cas inverse. Comme schématisé à la figure 1, qui représente une coupe selon un plan horizontal d'un dispositif du type de celui décrit dans le brevet EP 133 160, la paroi 2 du bac se déplace dans le sens indiqué par la flèche F. Par suite de ces forces de frottement, elle a tendance à entraîner la plaque 1 au niveau du joint paroi-plaque 3 (d'autant plus que ce dernier est écrasé entre elles par la pression exercée par le liquide d'usinage), provoquant ainsi un déplacement parasite, (dans le sens de la flèche f), de cette plaque. Celle-ci vient alors pousser fortement le joint annulaire plaque-bras 4 contre le bras-traversant 5, éventuellement en le comprimant, exerçant ainsi une pression perpendiculaire à la surface de ce dernier. Ceci provoque en particulier le flèchissement, la flexion de ce bras et, par suite, un déplacement parasite de son extrémité portant la tête de guidage (ou d'usinage) 15 dans la même direction que celle du coulissement de la paroi mobile, l'axe du bras étant dévié de son orientation primitive par rapport à la paroi (orientation qui est de préférence perpendiculaire à cette paroi). Ceci amène une perte de précision qui peut être importante. De plus, cette déformation du bras provoque également une déformation de la face de la colonne 8 dans laquelle le bras traversant est fixé au bâti de la machine, ce qui accentue l'amplitude de la déflexion du bras.

Du fait de la simultanéïté des mouvements selon les axes X et Y, cette déflexion présente un autre inconvénient. En effet, en même temps que s'effectue le déplacement selon la direction X, le joint 4 coulisse le long du bras 5 (dans la direction Y) et les frottements joint-bras, qui ont tendance à s'opposer au mouvement dans la direction Y, s'exercent le long d'une seule génératrice du bras, donc de manière asymétrique puisque le joint 4 est décentré par rapport à l'axe du bras. Le déplacement du joint 4 (et de la plaque 1) n'étant freiné que d'un seul côté du bras, la plaque 1 et le bras 5 ont tendance à ne plus être perpendiculaires, ce qui est une cause supplémentaire de déformation et de perte de précision.

Enfin, ce déplacement parasite de la plaque 1 dans la direction f, en comprimant asymétriquement le joint 4 contre le bras, peut même provoquer le décollement de ce joint de la surface du bras, et donc une perte d'étanchéité.

Il est évidemment possible d'améliorer le dispositif décrit dans le brevet EP 133 160 de façon à diminuer les forces de frottement entre la paroi et la plaque et entre le bras et le joint qui l'encercle. Les différentes techniques possibles (joints et revêtements spéciaux, lubrification, etc..) seront décrites plus loin. Toutefois, la pression exercée par le liquide d'usinage et l'intensité des forces de frottement qui en résultent sont telles que les améliorations ainsi apportées à la précision restent faibles et que les effets dûs aux frottements n'ont pu être diminués au point de supprimer sensiblement la déflexion horizontale du bras inférieur (bras-traversant).

La présente invention a pour but de remédier à ces inconvénients. L'objet de cette invention est un dispositif déflecteur, ou de protection, empêchant ces forces asymétriques de pression et de frottement de s'exercer asymétriquement sur le bras traversant, (on l'appelle aussi "dispositif anti-flexion"), agencé de manière à empêcher toute déformation du bras traversant, en particulier tout déplacement parasite horizontal de la tête de guidage qui serait dû à ces forces asymétriques.

Ce dispositif peut être agencé, en particulier, de manière à empêcher tout mouvement relatif entre la plaque et le bras, perpendiculaire à l'axe de ce dernier, par exemple

- en rendant la plaque solidaire d'un élément de la machine fixe dans la direction X (ce qui l'empêche d'être entraînée transversalement au bras par le mouvement de la paroi), ou bien
- en empêchant une pression asymétrique de la partie de la plaque enserrant le joint plaque-bras de s'exercer contre ce dernier, ou encore
- en empêchant qu'un éventuel mouvement parasite de la plaque dans la direction X ne se transmette à un système de guidage enserrant et/ou guidant ce joint plaque-bras.

La présente invention a donc trait à une machine pour découper par électroérosion au moyen d'un fil-électrode, travaillant au moins partiellement en immersion, ou en aspersion sous fortes pressions, avec au moins un bras traversant une paroi du bac étanche contenant le liquide d'usinage et comportant une plaque d'étanchéité masquant l'ouverture par laquelle passe le bras, reliée par au moins un joint à ce bras-traversant et le long de laquelle peut coulisser la paroi traversée par le bras, caractérisée par un dispositif déflecteur des forces de frottement et de pression agissant asymétriquement sur le bras-traversant et dûes aux frottements apparaissant entre la plaque et la paroi traversée par le bras ainsi qu'au niveau du joint entre ce dernier et la plaque, agencé de manière à empêcher la transmission au bras traversant d'un éventuel mouvement de la plaque dans la direction X perpendiculaire à l'axe de ce bras.

Une première variante (voir fig. 2), est constituée par un fourreau fixé au bâti de la machine, entourant le bras-traversant sans entrer en contact avec lui et venant s'intercaler entre la bras et le joint plaque-bras (qui devient ainsi un joint plaque-fourreau). Ce sera le fourreau qui sera alors soumis d'un seul côté à des frottements et à une pression exercée perpendiculairement par la plaque et transmise par le joint plaque-fourreau, et non plus le bras-traversant.

Le jeu entre le fourreau et le bras doit être suffisant pour qu'un espace subsiste toujours et partout entre eux, même en cas de déflexion maximum du fourreau. Ce jeu peut varier, par exemple, de 1 mm à 15 mm.

Il ne présente pas forcément une section de même forme que le bras. Ainsi un fourreau de section carrée, par exemple, peut envelopper un bras cylindrique. Toutefois, le bras et le fourreau sont, de préférence, deux cylindres coaxiaux.

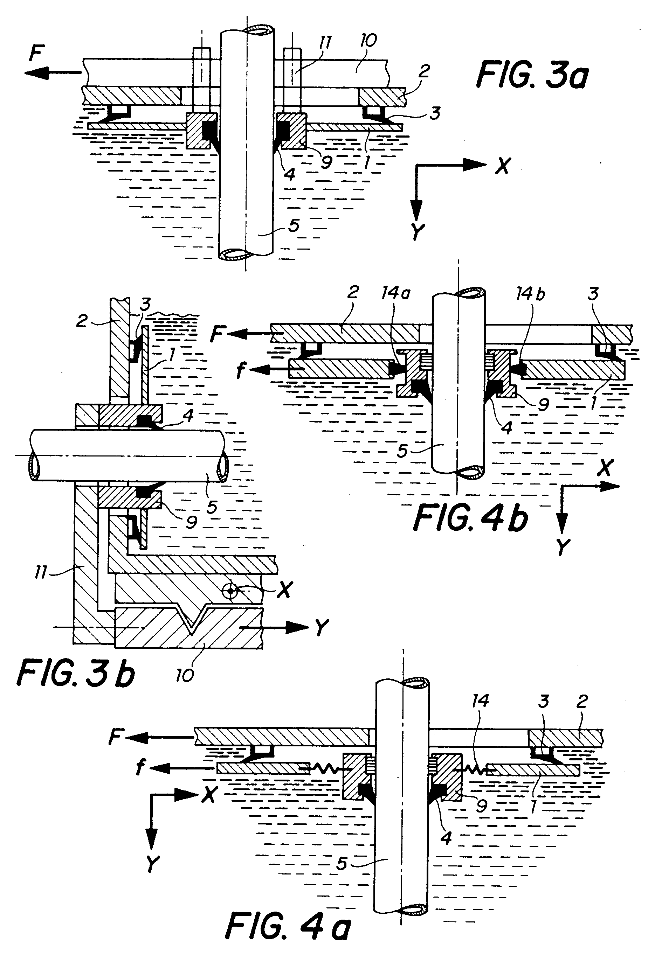

Une seconde variante (voir fig. 3) est constituée par un système de fixation de la plaque ou coulisseau de la table à mouvements croisés correspondant aux déplacements parallèles à l'axe du bras-traversant (déplacement Y). Ainsi, les forces dûes à la pression exercée par le liquide d'usinage sur la plaque et tendant à entraîner cette dernière avec la paroi mobile se transmettant par l'intermédiaire de ce système sur le coulisseau et non sur le joint plaque-bras et sur le bras-traversant (ou le fourreau lorsqu'on combine, par exemple, les deux variantes). Comme les forces de réaction apparaissent au niveau de ce coulisseau, elles ne se traduisent par aucune déformation du bras-traversant (ou du fourreau).

Une troisième variante est constituée par un dispositif dans lequel la plaque n'est plus solidaire du système de guidage enserrant et guidant le ou les joints annulaires entourant le bras-traversant, mais est reliée élastiquement à ce système de guidage. Les mouvements parasites de la plaque selon la direction X ne se transmettent plus à ce système et donc au joint enserrant le bras. (voir fig. 4).

Le dispositif monté sur la machine EDM de la présente invention peut être constitué différemment des trois variantes mentionnées ci-dessus à titre d'exemple. Ces dernières, qui se sont révélées particulièrement efficaces, peuvent être utilisées en combinaison et/ou conjointement à d'autres améliorations tendant à diminuer les forces de frottement au niveau des joints du dispositif d'étanchéité, améliorations qui seront décrites plus loin.

Les trois variantes seront mieux décrites à l'aide du dessin annexé, dans lequel

- la figure 1, déjà traitée ci-dessus, schématise le processus de déflexion du bras-traversant, dû en particulier aux frottements induits entre la plaque d'étanchéité et la paroi coulissante du bac par la pression du liquide d'usinage contre cette plaque et les parois du bac; il s'agit d'une coupe selon un plan horizontal, perpendiculaire à la paroi traversée par le bras et contenant l'axe de ce bras;
- la figure 2 illustre une première variante du dispositif selon la présente invention, constituée par un fourreau isolant mécaniquement le bras-traversant du dispositif d'étanchéité; c'est également une coupe selon un plan horizontal, perpendiculaire à la paroi traversée par le bras et contenant l'axe de ce bras;

- la figure 3 schématise une deuxième variante du dispositif selon la présente invention, constituée par un système de fixation de la plaque d'étanchéité à un élément fixe de la machine EDM; il s'agit d'une coupe selon un plan horizontal, perpendiculaire à la paroi traversée par le bras et contenant l'axe de ce bras, (Fig. 3a) et d'une coupe selon un plan vertical, perpendiculaire à la paroi traversée par le bras et contenant l'axe du bras (Fig 3b);
- la figure 4 représente une troisième variante du dispositif selon la présente invention, constituée par un système de liaison élastique entre la plaque d'étanchéité et l'ensemble susceptible de coulisser le long du bras-traversant; c'est une coupe selon un plan horizontal, perpendiculaire à la paroi traversée par le bras et contenant l'axe de ce bras;

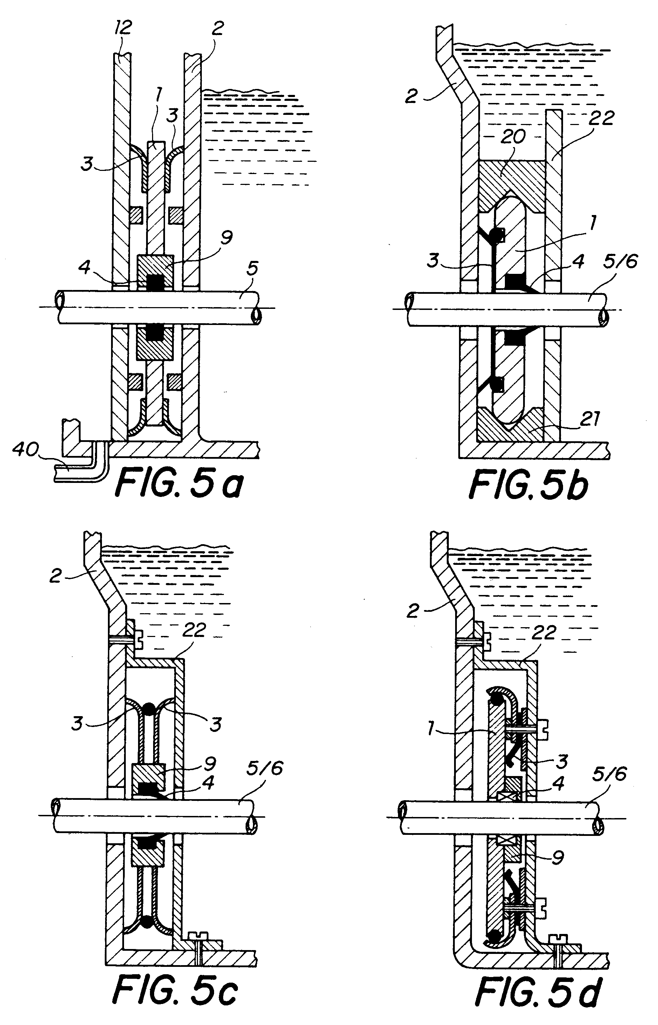

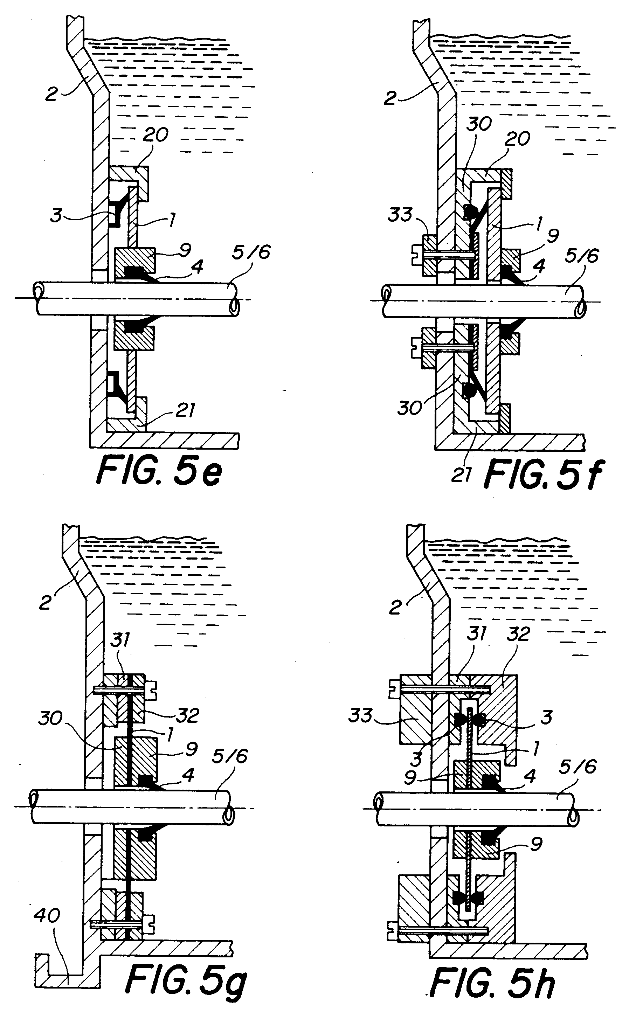

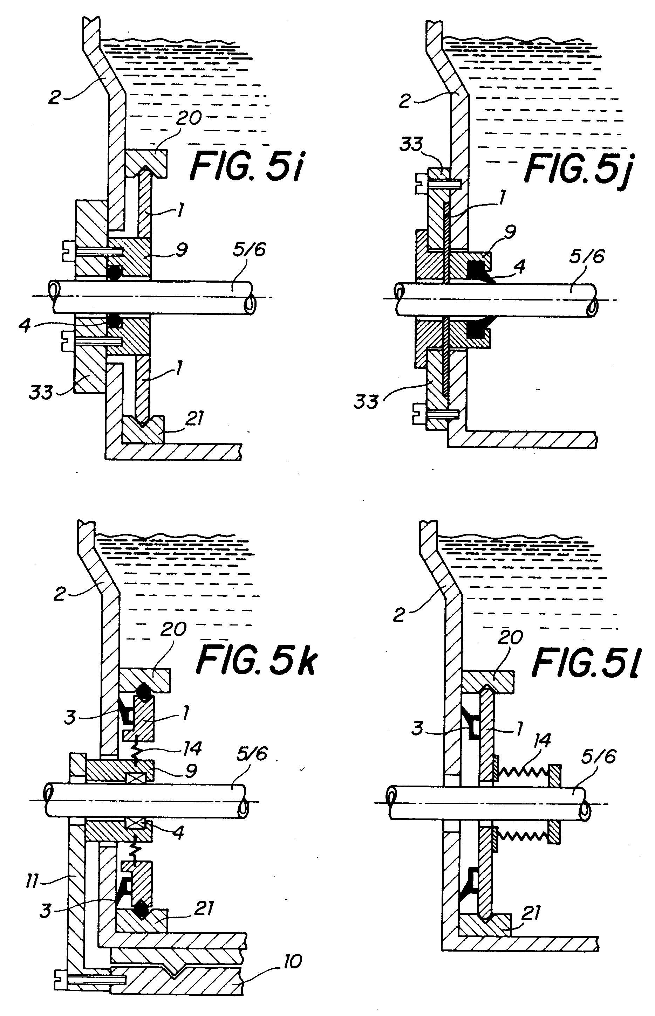

- la figure 5 rassemble des coupes selon un plan vertical, perpendiculaire à la paroi traversée par le bras et contenant son axe. Ces coupes illustrent divers modes possibles de réalisations du dispositif d'étanchéité.

Selon un premier mode de réalisation de la présente invention, comme montré à la figure 2, la plaque 1 se prolonge par une pièce 9, pouvant présenter divers profils dans lesquels viennent s'insérer un ou plusieurs joints bras-plaque 4 et guidant ce dernier lorsqu'il coulisse le long du fourreau 6 monté coaxialement autour du bras-traversant 5. La plaque 1 est fortement pressée contre les joints 3 par la pression du liquide d'usinage, assurant ainsi une bonne étanchéité. (Signalons que lorsqu'on ne travaille pas en immersion, la plaque 1 peut être pressée contre les joints 3 par tout système connu et approprié). Par suite, la paroi 2 l'entraîne en se déplaçant dans la direction X, ce qui conduit à des forces de pression asymétriques, exercées d'un seul côté contre la paroi du fourreau 6 par le joint annulaire 4 enserré dans le profil de guidage 9 et provoquant le déflection du fourreau. L'espace 7 ménagé entre le fourreau 6 et le bras 5 est suffisant pour que cette déflection ne se transmette pas au bras 5. Le fourreau 6 est fixé au bâti, le plus loin possible de l'endroit où est encastré le bras-traversant. Le bras est encastré dans la face de la colonne 8 située en regard de la paroi du bac traversée par le bras et le fourreau s'évase à son extrémité de manière à être fixé sur les côtés de la colonne 8 adjacents à cette face. Ce type de fixation du fourreau empêche que les forces dues à la flexion du fourreau et qui se transmettent à la colonne, le long de ce dernier, par son encastrement dans le bâti, ne viennent déformer cette colonne à proximité de l'endroit où le bras-traversant 5 est lui-même encastré. On évite ainsi qu'une déformation du bâti ne provoque une déflexion du bras-traversant.

Ce fourreau 6 peut se prolonger jusqu'à la tête d'usinage 15 portée par le bras 5, ou s'arrêter à quelque distance de l'ouverture traversée par le bras.

Un joint souple peut être disposé entre le fourreau 6 et le bras 5, rendant éventuellement étanche l'espace 7 ménagé entre le bras et fourreau, mais ne transmettant pas la déformation du fourreau 6 au bras 5. Il peut s'agir en particulier d'un soufflet 16, comme représenté à la figure 2, et disposé à proximité de la tête d'usinage 15. Il peut également être d'un autre type et disposé par exemple à proximité de la fixation du bras 5 sur la colonne 8.

Ce fourreau 6 peut présenter une paroi multiple et être, par exemple, un cylindre à double paroi. Comme l'espace 7, l'espace ménagé entre ces doubles parois peut être étanche ou non.

L'espace 7, qui est en général de quelques millimètres, ou celui ménagé entre d'éventuelles doubles parois du fourreau peut être avantageusement utilisé, lorsqu'il est étanche et donc sec, pour amener certains câblages à la tête d'usinage 15, ou pour y monter le dispositif nécessaire au retour du fil-électrode. Il est particulièrement avantageux d'utiliser l'un de ces espaces pour thermostabiliser le bras 5 à la température du liquide d'usinage, par exemple, grâce à des conduites permettant la circulation d'un fluide approprié, par exemple de l'eau ou du liquide d'usinage maintenus à une température constante, qui peut être celle du liquide retenu dans le bac, par exemple 20° C.

Une telle thermostabilisation du bras-traversant est surtout utile lorsqu'on travaille en immersion partielle ou en aspersion.

Il est aussi possible d'immerger un ensemble fourreau-bras qui ne comporte pas de joint étanchéifiant l'espace 7. Ce dernier peut ainsi se remplir de liquide d'usinage. On peut alors prévoir un organe, tel une membrane souple perméable, qui filtre ce liquide d'usinage afin d'éviter un encrassement de l'espace 7.

Au lieu d'être fixé sur les côtés de la colonne 8, le fourreau peut la traverser, comme c'est le cas pour le bras. Il peut également, dans une machine de conception différente, être fixé par exemple à un portique, à une table fixe, etc...

Selon un deuxième mode de réalisation particulièrement avantageux de l'invention, schématisé à la figure 3, la plaque 1 est fixée grâce à un dispositif 11 au coulisseau 10 de la table à mouvements croisés. Sur l'exemple illustré par la figure 3, cette fixation est réalisée à l'endroit du profil de guidage 9. Ce coulisseau 10, qui assure les mouvements dans la direction Y, reste immobile lors du déplacement selon la direction X. La plaque 1 n'est donc plus entraînée dans la direction X lors du coulissement de la paroi 2. Elle ne vient donc plus presser et éventuellement comprimer le joint annulaire 4, ce qui supprime toute pression asymétrique sur le bras 5, perpendiculaire à son axe, et donc tout risque de flexion de ce dernier. De plus, le joint annulaire 4 enserrant le bras 5 n'étant plus soumis à une pression asymétrique, ne risque plus d'être écrasé d'un côté; ceci améliore l'étanchéité et facilite son coulissement le long du bras 5 lorsque le bac effectue un déplacement dans la direction Y.

D'autres avantages de cette variante par rapport aux deux autres variantes, et par rapport au dispositif décrit dans le brevet EP 133 160, sont dûs à l'amélioration de la transmission au joint 4 du mouvement dans la direction Y commandé par le déplacement du coulisseau 10. En effet, selon cette variante, par l'intermédiaire du dispositif 11, le mouvement du coulisseau 10 se transmet quasi directement au profil de guidage 9 prolongeant la plaque 1 enserrant le joint annulaire 4. Dans les autres variantes, par contre, le mouvement du coulisseau 10 se transmet d'abord au bac, en particulier à la paroi 2, puis par l'intermédiaire du joint plaque/paroi 3 à la plaque 1 et au profil 9 enserrant le joint 4.

Selon une troisième variante schématisée à la figure 4, le dispositif d'étanchéité décrit dans le brevet européen publié sous le No 133 160, est modifié de façon que la pièce 9 enserrant le joint annulaire 4 ne soit plus partie intégrante et solidaire de la plaque 1, mais soit reliée à cette dernière par une liaison 14 étanche et assez élastique pour ne pas transmettre un mouvement de l'un de ces organes 1 ou 9 à l'autre, en particulier tout mouvement parasite de la plaque 1 à l'organe de guidage 9 et donc au joint annulaire 4 entourant le bras 5 ou le fourreau 6. Ce joint 4 n'exerce alors plus aucune pression asymétrique sur le bras 5 et peut coulisser librement le long de ce dernier dans la direction Y tout en assurant une bonne étanchéité, même si la plaque 1 se déplace selon f. Ceci est surtout efficace lorsque les mouvements parasites de la plaque sont relativement faibles, par suite, soit d'une pression pas trop importante du liquide ou par suite de frottements plaque/paroi relativement faibles.

A l'inverse, le mouvement selon la direction Y ne pouvant plus être transmis au joint 4 par la plaque 1, le mouvement de cette dernière selon Y ne peut plus commander le coulissement du joint 4 le long du bras 5. Un système approprié, non représenté sur la figure 4a, relié à la pièce 9 doit alors commander son coulissement. Il peut s'agir d'un système du type du dispositif 11 décrit en relation avec la variante précédente, c'est-à-dire reliant l'organe 9 au coulisseau 10 de la table à mouvement croisé (figure 5k). Une combinaison de ces deux variantes peut ainsi se révéler particulièrement avantageuse.

Toutefois, une configuration appropriée du profil 9 peut permettre son entrainement par la plaque 1 dans la direction Y (figure 4b). La liaison entre le profil 9 et la plaque 1 peut, par exemple, être assurée par un joint o'ring. il sera écrasé asymétriquement (en 14b et non en 14a), mais ne transmettra pas le mouvement selon f de la plaque 1 au profil 9.

Il est aussi possible de prévoir une liaison 14, par exemple un soufflet ou une membrane cylindrique, agencée de manière à ce que seule la plaque 1 se déplace dans la direction Y lors des mouvements du bac dans cette direction, l'ensemble constitué par la pièce 9 et le joint 4 restant fixes par rapport au bras 5. Le joint 4 n'assure alors plus qu'une fonction d'étanchéité. Il n'y a plus de frottements dans la direction Y. Ceci est évidemment surtout réalisable pour de petites courses dans la direction Y (voir en particulier la figure 5 l).

Enfin, cette troisième variante présente encore un autre avantage : la plaque 1 n'étant plus reliée de façon rigide au joint 4 et à son dispositif de guidage 9, elle est libre de se déplacer légèrement dans la direction X lorsque le dispositif d'étanchéité coulisse dans la direction Y le long d'un bras 5 dont l'axe ne serait pas parfaitement parallèle à cette direction Y. Cette variante permet ainsi de compenser les défauts d'alignements du bras 5.

Il est bien entendu que les exemples ci-dessus ne présentent aucun caractère limitatif, et sont donnés uniquement à titre d'illustration. De nombreuses modifications peuvent être réalisées, en particulier en ce qui concerne la constitution de la plaque d'étanchéité, le type des joints, le profil de la paroi du bac coulissant le long de la plaque, le type de système élastique et étanche reliant la plaque et le profil de guidage du joint annulaire coulissant le long du bras, utilisé dans la troisième variante, l'utilisation de l'espace entre le fourreau de la première variante et le bras, le système utilisé dans la deuxième variante fixant la plaque au coulisseau de la table à mouvements croisés responsable du mouvement selon la direction Y ainsi que le type de machine EDM considéré, sans sortir du domaine de la présente invention.

Les variantes décrites ci-dessus peuvent être combinées deux à deux ou même utilisées toutes les trois ensemble.

De plus, comme déjà mentionné ci-dessus, tout mesure tendant à diminuer les frottements entre plaque et paroi et entre plaque et bras peut être utilisée conjointement à un dispositif selon la présente invention.

Ainsi, la plaque d'étanchéité peut être rigide ou bien constituée par une feuille, une lame ou un ruban souple et flexible en acier inoxydable, par exemple, ou dans une autre matière résistant à la corrosion et à la pollution du liquide d'usinage telles une feuille d'aluminium ou de PVC. Elle peut être constituée par ou revêtue avec une matière permettant le glissement avec le moins de frottements possible du joint plaque-paroi, au cas où ce dernier est fixé sur la paroi mobile. Lorsqu'elle est en forme de ruban et grâce à deux systèmes prévus à cet effet, elle peut venir s'enrouler de part et d'autre du dispositif d'étanchéité ou bien glisser le long des parois du bac perpendiculaires à la paroi mobile 2, afin de permettre un très large mouvement dans la direction X. Cet enroulement peut être réalisé, par exemple, de façon à donner à une plaque fine une incurvation compensant celle provoquée par la pression du liquide.

La figure 5 résume divers profils possibles pour la paroi mobile du bac, pour les différents systèmes, en particulier les glissières permettant son coulissement le long de la plaque d'étanchéité, pour les pièces de renfort et les extrémités de la plaque qui viennent s'engager dans les-dites glissières, ainsi que divers types possibles de joints. La plaque d'étanchéité et son prolongement guidant le joint annulaire 4 enserrant le bras-traversant ou le fourreau, la paroi mobile, le bras-traversant, le fourreau, ainsi que le joint plaque-paroi sont toujours désignés respectivement par les numéros de référence 1, 9, 2 , 5, 6 et 3.

Ainsi, la paroi 2 du bac coulissant le long de la plaque 1 peut être doublée par une seconde paroi parallèle 12 (fig. 5a), ou tout au moins par un panneau 22 s'élevant sur une partie de la hauteur du bac (figures 5b, 5c et 5d), et comportant également une ouverture permettant le passage du bras 5 éventuellement entouré par un fourreau 6. Elle peut comporter deux glissières 20 et 21 dans lesquelles vient s'engager la plaque d'étanchéité 1 (figures 5b, 5e, 5f, 5i, 5k et 5l).

Cette paroi 2 est réalisée, en général, dans une plaque de tôle, donc dans un matériau relativement flexible et déformable. Maiscomme il est important qu'elle reste bien parallèle à la plaque d'étanchéité 1 afin de pouvoir coulisser le long de cette dernière avec le moins de frottements possibles, il peut être avantageux de la renforcer (afin qu'elle ne s'incurve pas sous la pression du liquide d'usinage contenu dans le bac) par exemple par un cadre rigide 30 (figures 5f et 5g), et/ou même par un double cadre de guidage 31 et 32 coulissant de part et d'autre de la plaque d'étanchéité, ce qui améliore non seulement la géométrie de la paroi mais aussi celle de la plaque d'étanchéité 1 (figures 5g et 5h). En effet, cette dernière est en général réalisée dans une lame souple en acier inox, par exemple. Une pièce de renfort 33 peut également être fixée à l'extérieur du bac (figures 5f, 5h, 5i et 5j). Elle peut délimiter une glissière guidant le déplacement de la paroi mobile 2 (figure 5i). Elle peut aussi servir de glissière et de système de guidage pour la plaque d'étanchéité 1, elle-même disposée à l'extérieur du bac (figure 5j). La paroi mobile 2 se déformant facilement, il a été envisagé de percer les trous nécessaires à la fixation des glissières ou des renforts par un procédé EDM afin d'éviter de la bosseler en utilisant les méthodes classiques. Il est ainsi possible de percer la plaque de tôle sans affecter sa planéïté. On peut aussi réaliser un bac moulé dans un matériau rigide, en fonte d'aluminium par exemple, qui présente une géométrie constante.

De plus, si l'ensemble formé par la paroi mobile et les pièces de renfort fixées sur cette dernière est agencé de manière à ménager juste une fente dans laquelle vient se loger la plaque d'étanchéité, le joint paroi-plaque devient facultatif, une légère fuite étant acceptable si on travaille avec des fuites contrôlées (voir, pour exemple, les figures 5g et 5j). Ceci peut également être réalisé avec un profil approprié des glissières 20 et 21 dans lesquelles viennent se loger les extrémités de la plaque d'étanchéité 1 et de ces extrémités (figure 5i). Ainsi les bords arrondis d'une plaque d'étanchéité 1 réalisée en PVC ou en aluminium peuvent glisser de manière étanche dans une gorge en V revêtue de TEFLON.

Les joints utilisés dans le présent dispositif peuvent être des types les plus divers et constitués par n'importe lequel des matériaux bien connus dans l'état de la technique : joints circulaires ou membranes en caoutchouc mousse, PVC, néoprène, polytétrafluoroéthylène et autres matières plastiques (TEFLON, LUBRIFLON, LINATEX, NYLON, TURCITE), tissus imperméables, lames ou rubans métalliques, par exemple en inox ou en laiton, et toute autre matière assurant une bonne étanchéité, même lorsqu'elle est soumise à la pression du liquide d'usinage, tout en permettant à la paroi mobile de coulisser facilement le long de la plaque d'étanchéité ou bien au(x) joint(s) circulaire(s) de glisser le long du bras, ceci tout en résistant à une immersion dans le liquide d'usinage. Ils peuvent être collés aussi bien que fixé, par exemple par un moyen mécanique, sur la paroi mobile 2 ou sur la plaque d'étanchéité 1. Ils seront évidemment choisis en fonction de la surface sur laquelle ils devront glisser et en tenant compte de leurs deux fonctions : un coulissement avec le moins de frottements possible, et une bonne étanchéité. Ainsi un patin râcleur destiné à glisser le long d'un bras ou d'un fourreau en acier inox, sera avantageusement revêtu de TEFLON sur la surface de contact correspondant à ce glissement, le corps proprement dit pouvant être constitué par tout élastomère de propriétés mécaniques adéquates. Un glissement avec peu de frottements est obtenu, par exemple, avec un joint en TEFLON glissant sur un bras ou un fourreau chromé dur. De même les pièces de guidage 9 des joints annulaires 4 sont en général constituées en métal dur, en céramique ou en TEFLON. Il peut être avantageux d'utiliser des systèmes de guidage munis d'un joint élastique annulaire, du type joint râcleur, par exemple , assurant l'étanchéité, et d'un organe annulaire à faible coefficient de frottement, ayant une fonction de guidage, tel un roulement à billes ou un anneau de TEFLON (fig.1, 2 et 4) ). Un seul joint peut d'ailleurs combiner ces deux types de surface (fig. 3a et 3b). Le joint râcleur est placé de façon à retenir le dépôt laissé par le liquide d'usinage sur le bras ou le fourreau, protégeant ainsi le joint de guidage et assurant le bon glissement de celui-ci. Citons en particulier les joints commercialisés par les maisons SIMRIT, NEOTECHNA, MAAG TECHNIC, PERROT , ANGST & PFISTER et ELASTOFLON. L'étanchéité entre la plaque et la paroi mobile peut être assurée de façon satisfaisante en profilant de façon appropriée les bords de la plaque d'étanchéité, ces derniers venant s'engager dans une glissière revêtue, par exemple, de TEFLON. Il n'est plus nécessaire de prévoir un joint plaque-paroi dans ce cas.

Dans le cas de la seconde variante, le joint plaque-paroi n'a plus à transmettre le mouvement du bac dans la direction Y à la plaque et au joint annulaire afin de faire coulisser ce dernier sur le bras car ce mouvement est commandé directement par le coulisseau correspondant de la table à mouvements croisés. Ceci permet de choisir un joint qui se déforme simplement dans la direction X, sans transmettre à la plaque un déplacement parasite dans cette direction. On peut encore diminuer le risque de l'apparition d'une sollicitation à un mouvement dans la direction X, au niveau du système de guidage du joint annulaire enserrant le bras, lorsque cette variante est combinée à la troisième variante : les mouvements de la plaque d'étanchéité 1 sont complétement indépendants de ceux de l'ensemble système de guidage 9 -joint annulaire 4 (fig. 5k et 5l).

Dans ce cas, la liaison entre la plaque d'étanchéité 1 et le système de guidage 9 du joint annulaire 4 peut être souple, de façon à assurer l'étanchéité et être constitué, par exemple, par un soufflet ou par une membrane cylindrique suffisament élastiques pour que la plaque puisse se déplacer selon toute sa course dans la direction Y et puisse être animée d'un mouvement parasite selon X sans devoir entraîner le système de guidage 9. Le coulissement de ce dernier le long du bras 5 (ou du fourreau 6) est en effet commandé par le système 11 solidaire du coulisseau 10. (figure 5k).

Dans un autre mode d'exécution, correspondant de préférence à des courses dans la direction Y relativement faibles, l'ensemble système 9-joint annulaire 4 peut être fixe par rapport au bras 5 et assurer simplement l'étanchéité de l'ensemble (figure 5l). Cette construction supprime évidement tout frottement dans la direction Y.

Les forces de frottement apparaissant au niveau des joints plaque-paroi et des joints annulaires enserrant le bras sont évidement conditionnées en grande partie, non seulement par les matériaux qui les constituent, mais aussi par leur configuration et l'état des surfaces sur lesquelles ils glissent (ou frottent), ainsi que par la géométrie de ces dernières.

On a vu ci-dessus diverses mesures qui améliorent le parallélisme des surfaces en mouvement relatif au niveau de ces joints.

Il est possible d'améliorer encore la précision de ces déplacements relatifs en réduisant la surface de frottement des joins plaque-bras sur la plaque d'étanchéité. Ainsi, au lieu de fixer le joint sur la plaque comme décrit dans le brevet EP 133 160 (Fig. 6a, 5b, 5c, 5k et 5l), on le fixe sur la paroi mobile (Fig. 5d, 5e et 5f). De même, l'utilisation d'un bac à simple paroi, donc avec un seul joint plaque-paroi au lieu de deux comme décrit dans le même brevet, diminue de moitié la surface de frottement. On peut même supprimer le joint, comme déjà mentionné ci-dessus (Fig. 5g, 5i et 5j).

Par ailleurs, les surfaces sur lesquelles frottent les joints (bras-traversant et paroi mobile ou plaque d'étanchéité) peuvent être rendues plus glissantes, par exemple grâce à un revêtement approprié (chromage du bras, revêtement EMATAL, paroi mobile émaillée) ,à une lubrification, (graisse de silicone) ou à un dispositif râcleur disposé par exemple à une extrémité du joint annulaire afin d'éliminer les dépôts laissés par le liquide d'usinage ou d'effacer les traces de "gommage" qui affecteraient le glissement de ce joint le long du bras.

Rappelons également la possibilité de guider le coulissement du joint annulaire grâce à une douille ou une cage à billes (protégées d'un contact avec le liquide d'usinage ) ou grâce à des galets en nylon ou en Teflon, par exemple (figures 5d,5i et 5k ).Il est également possible de diminuer l'écrasement du joint (et donc les forces de frottement) en disposant les glissières dans lesquelles s'engagent les bords de la plaque derrière la paroi mobile, c'est-à-dire à l'extérieur du bac (figure 5j) ou en les profilant de façon appropriée (figure 5k et 5l) ou en disposant le joint entre la plaque et le panneau de renforcement (figure 5b et 5d). Comme on est en général amené à réaliser un compromis entre les frottements exercés par les joints mobiles utilisés dans le dispositif d'étanchéité de la présente invention et leur étanchéité, au lieu de rechercher une étanchéité absolue, il peut être préférable de tolérer un certain débit de fuites contrôlées. Ces dernières sont récupérées et canalisées par une gouttière (schématisée sous le numéro de référence 40 aux figures 5a et 5g) ménagée à l'arrière de la paroi mobile du bac et renvoyée vers le réservoir de fluide d'usinage.

Les dispositifs décrits ci-dessus permettent ainsi d'obtenir une très bonne précision du positionnement de la tête de guidage inférieure, selon les axes X et Y, ainsi qu'une étanchéité satisfaisante, et, dans le cas de la thermostabilisation du bras-traversant grâce à l'utilisation d'un fourreau, une fiabilité et une précision encore améliorées.

**Revendications**

1. Machine pour découper par électroérosion en immersion au moyen d'un fil-électrode tendu et défilant entre deux têtes de guidage montées chacune sur un bras dont l'un au moins traverse une ouverture ménagée dans l'une des parois (2) d'un bac étanche pouvant contenir du liquide d'usinage dans lequel est immergé ce bras-traversant (5) et la pièce à usiner, ce bac et ce bras-traversant (5) étant mobiles l'un par rapport à l'autre, cette machine comportant une plaque d'étanchéité (1), coulissant le long de la paroi (2) traversée par le bras (5) et masquant l'ouverture qui y est ménagée, percée d'un orifice laissant passer ce bras (5) et dans lequel est monté au moins un joint (4) la reliant à ce bras-traversant (5), caractérisée par un fourreau (6) monté entre le bras-traversant (5) et le joint (4) reliant ce bras à la plaque d'étanchéité (1), enveloppant le bras-traversant (5) sans entrer en contact avec lui et fixé au bâti de la machine sur les côtés de la colonne adjacents à la face dans laquelle est encastré le bras (5), ce qui évite l'action de frottements et de pressions asymétriques sur le bras-traversant (5) au niveau du joint (4) le reliant à la plaque d'étanchéité (1), dus aux frottements entre cette plaque d'étanchéité (1) et la paroi (2) traversée par le bras (5) lorsqu'elles coulissent l'une contre l'autre.

2. Machine pour découper par électroérosion en immersion au moyen d'un fil-électrode tendu et défilant entre deux têtes de guidage montées chacune sur un bras dont l'un au moins traverse une ouverture ménagée dans l'une des parois (2) d'un bac étanche pouvant contenir du liquide d'usinage dans lequel est immergé ce bras-traversant (5) et la pièce à usiner, ce bac et ce bras-traversant (5) étant mobiles l'un par rapport à l'autre, cette machine comportant une plaque d'étanchéité (1), coulissant le long de la paroi (2) traversée par le bras (5) et masquant l'ouverture qui y est ménagée, percée d'un orifice laissant passer ce bras (5) et dans lequel est monté au moins un joint (4) la reliant à ce bras-traversant (5), caractérisée par des éléments (9, 11) fixant la plaque d'étanchéité (1) au coulisseau (10) de la table à mouvements croisés commandant les déplacements du bac parallèles à l'axe du bras-traversant (5), ce qui évite l'action de frottements et de pressions asymétriques sur le bras-traversant (5) au niveau du joint (4) le reliant à la plaque d'étanchéité (1), dus aux frottements entre cette plaque d'étanchéité (1) et la paroi (2) traversée par le bras (5) lorsqu'elles coulissent l'une contre l'autre.

3. Machine pour découper par électroérosion en immersion au moyen d'un fil-électrode tendu et défilant entre deux têtes de guidage montées chacune sur un bras dont l'un au moins traverse une ouverture ménagée dans l'une des parois (2) d'un bac étanche pouvant contenir du liquide d'usinage dans lequel est immergé ce bras-traversant (5) et la pièce à usiner, ce bac et ce bras-traversant (5) étant mobiles l'un par rapport à l'autre, cette machine comportant une plaque d'étanchéité (1), coulissant le long de la paroi (2) traversée par le bras (5) et masquant l'ouverture qui y est ménagée, percée d'un orifice laissant passer ce bras (5) et dans lequel est monté au moins un joint (4) la reliant à ce bras-traversant (5), caractérisée par un organe (14) élastique et étanche reliant la plaque d'étanchéité (1) à un système de guidage (9) enserrant et/ou guidant le ou les joint(s) (4) entourant le bras-traversant (5) de manière à empêcher les mouvements de cette plaque (1) de se transmettre à ce système (9), ce qui évite l'action de frottements et de pressions asymétriques sur le bras-traversant (5) au niveau du joint (4) le reliant à la plaque d'étanchéité (1), dus aux frottements entre cette plaque d'étanchéité (1) et la paroi (2) traversée par le bras (5) lorsqu'elles coulissent l'une contre l'autre.

4. Machine selon l'une des revendications 1 à 3, caractérisée par le fait qu'au moins un joint (3) est disposé entre la plaque d'étanchéité (1) et la paroi coulissante (2).

5. Machine selon l'une des revendications 1 à 3, caractérisée par le fait que la plaque d'étanchéité (1) s'engage dans deux glissières fixées à la paroi coulissante (2) et est profilée, ainsi que ces dernières, de façon à assurer une liaison relativement étanche avec cette paroi (2).

6.  Machine selon la revendication 1, caractérisée par un fourreau (6) relié au bras (5) par une liaison (16) souple et étanche destinée à isoler l'espace (7) ménagé entre le bras (5) et le fourreau (6) du liquide d'usinage contenu dans le bac.

7.  Machine selon la revendication 6, caractérisée par le fait que cet espace (7) est parcouru par un fluide thermostabilisant le bras-traversant (5).

8.  Machine selon la revendication 1, caractérisée par un fourreau (6) à double paroi.

9.  Machine selon la revendication 3, dans laquelle le système de guidage (9) est relié de manière rigide au coulisseau (10) de la table à mouvements croisés commandant les déplacements du bac parallèles à l'axe du bras-traversant (5).

10. Machine selon la revendication 3, caractérisée par le fait que le ou les joint(s) (4) et le système de guidage (9) sont fixes par rapport au bras-traversant (5).

**Claims**

1.  Machine for cutting by submerged electrical discharge machining by means of an electrode wire tensioned between and running between two guide heads each of which is mounted on an arm, one at least of the arms passing through an opening in one of the walls (2) of a tight tank fitted to contain a machining liquid in which said passing-arm (5) and the workpiece are submerged, said tank and said passing-arm (5) being able to move with respect to each other, this machine having a sealing plate (1) sliding along said wall (2) crossed through by said arm (5) and masking the opening made in the tank and provided with a hole to allow said arm (5) to cross through it, said hole being fitted with at least one seal (4) linking said plate (1) to said passing-arm (5), characterized by a sheath (6) mounted between the passing-arm (5) and the seal (4) connecting said arm to the sealing plate (1) and enclosing said passing-arm (5) without coming into contact with it and fixed to the frame of the machine to the sides of the column which are adjacent to the face in which is embedded the passing-arm (5), thereby preventing action of asymmetric frictional and pressure forces to be exerted on said passing-arm (5), at the location of the seal (4) which connects it to the sealing plate (1), said asymmetric frictional and pressure forces being due to the frictions arising between this sealing plate (1) and the wall (2) crossed through by said arm (5) when they are sliding one along the other.

2.  Machine for cutting by submerged electrical discharge machining by means of an electrode wire tensioned between and running between two guide heads each of which is mounted on an arm, one at least of the arms passing through an opening in one of the walls (2) of a tight tank fitted to contain a machining liquid in which said passing-arm (5) and the workpiece are submerged, said tank and said passing-arm (5) being able to move with respect to each other, this machine having a sealing plate (1) sliding along said wall (2) crossed through by said arm (5) and masking the opening made in the tank and provided with a hole to allow said arm (5) to cross through it, said hole being fitted with at least one seal (4) linking said plate (1) to said passing-arm (5), characterized by components (9,11) fixing the sealing plate (1) to the slide (10) of the cross-slides table which operates the movements of the tank which are parallel to the axis of the passing-arm (5), thereby preventing action of asymmetric frictional and pressure forces to be exerted on said passing-arm (5), at the location of the seal (4) which connects it to the sealing plate (1), said asymmetric frictional and pressure forces being due to the frictions arising between this sealing plate (1) and the wall (2) crossed through by said arm (5) when they are sliding one along the other.

3.  Machine for cutting by submerged electrical discharge machining by means of an electrode wire tensioned between and running between two guide heads each of which is mounted on an arm, one at least of the arms passing through an opening in one of the walls (2) of a tight tank fitted to contain a machining liquid in which said passing-arm (5) and the workpiece are submerged, said tank and said passing-arm (5) being able to move with respect to each other, this machine having a sealing plate (1) sliding along said wall (2) crossed through by said arm (5) and masking the opening made in the tank and provided with a hole to allow said arm (5) to cross through it, said hole being fitted with at least one seal (4) linking said plate (1) to said passing-arm (5), characterized by a leakproof linking component (14) providing a resilient connection between the sealing plate (1) and a guide part (9) surrounding and/or guiding one or more seals (4) located around the passing- arm (5), which is arranged to avoid the movements of this plate- (1) to be transferred to said part (9), thereby preventing action of asymmetric frictional and pressure forces to be exerted on said passing- arm (5), at the location of the seal (4) which connects it to the sealing plate (1), said asymmetric frictional and pressure forces being due to the frictions arising between this sealing plate (1) and the wall (2) crossed through by said arm (5) when they are sliding one along the other.

4. Machine according to one of claims 1 to 3, characterized by the fact that at least one seal (3) is arranged between the sealing plate (1) and the sliding wall (2).

5. Machine according to one of claims 1 to 3, characterized by the fact that the sealing plate (1) engages in two slides fixed to the sliding wall (2) and is shaped, as are the slides, so as to ensure a relatively leakproof connection with this wall (2).

6. Machine according to claim 1, characterized by a sheath (6) connected to the passing-arm (5) by a flexible leakproof link (16) and intended for isolating the space (7) between said arm (5) and said sheath (6) from the machining liquid contained in the tank.

7. Machine according to claim 6, characterized by the fact that a fluid stabilizing the temperature of the passing-arm (5) flows through this space (7).

8. Machine according to claim 1, characterized by a sheath (6) with a double wall.

9. Machine according to claim 3, characterized by a guide part (9) rigidly connected to the slide (10) of the cross-slides table which operates the movement of the tank parallel to the axis of the passing-arm (5).

10. Machine according to claim 3, characterized by the fact that the seal or seals (4) and the guide part (9) are fixed with respect to the passing-arm (5).

**Patentansprüche**

1. Maschine zum Schneiden mittels Elektroerosion im Tauchbad mittels einer Drahtelektrode, die zwischen zwei Führungsköpfen gespannt ist und abläuft, die jeweils an einem Arm montiert sind, von denen wenigstens einer durch eine Öffnung hindurchtritt, die in einer von Wandungen (2) eines dichten Behälters zur Aufnahme der Arbeitsflüssigkeit angebracht ist, in der der hindurchtretende Arm (5) und das zu bearbeitende Werkstück eingetaucht sind, wobei dieser Behälter und dieser hindurchtretende Arm (5) in bezug zueinander beweglich sind, wobei diese Maschine eine Dichtungsplatte (1) umfaßt, die längs der von dem Arm (5) durchsetzten Wandung (2) verschiebbar ist und die Öffnung abdeckt, die darin angebracht ist, mit einer Durchtrittsöffnung, die diesen Arm (5) durchtreten läßt, versehen und in der wenigstens eine Dichtung (4), die sie mit diesem hindurchtretenden Arm (5) verbindet, angeordnet ist, dadurch gekennzeichnet, daß eine Hülse (6) zwischen dem hindurchtretenden Arm (5) und der Dichtung (4) montiert ist, die diesen Arm mit der Dichtungsplatte (1) verbindet, den hindurchtretenden Arm (5), ohne mit diesem in Kontakt zu treten, umfaßt und am Maschinenrahmen an den Seiten des Ständers benachbart zu der Seite, an der der Arm (5) eingebaut ist, befestigt ist, was die Einwirkung von asymmetrischen Reib- und Druckkräften auf den hindurchtretenden Arm (5) im Bereich der Dichtung (4), die ihn mit der Dichtungsplatte (1) verbindet, aufgrund von Reibkräften zwischen dieser Dichtungsplatte (1) und der Wandung (2), durch die der Arm (5) hindurchtritt, wenn sie sich gegeneinander bewegen, vermeidet.

2. Maschine zum Schneiden mittels Elektroerosion im Tauchbad mittels einer Drahtelektrode, die zwischen zwei Führungsköpfen gespannt ist und abläuft, die jeweils an einem Arm montiert sind, von denen wenigstens einer durch eine Öffnung hindurchtritt, die in einer von Wandungen (2) eines dichten Behälters zur Aufnahme der Arbeitsflüssigkeit angebracht ist, in der der hindurchtretende Arm (5) und das zu bearbeitende Werkstück eingetaucht sind, wobei dieser Behälter und dieser hindurchtretende Arm (5) in bezug zueinander beweglich sind, wobei diese Maschine eine Dichtungsplatte (1) umfaßt, die längs der von dem Arm (5) durchsetzten Wandung (2) verschiebbar ist und die Öffnung abdeckt, die darin angebracht ist, mit einer Durchtrittsöffnung, die diesen Arm (5) durchtreten läßt, versehen und in der wenigstens eine Dichtung (4), die sie mit diesem hindurchtretenden Arm (5) verbindet, angeordnet ist, gekennzeichnet durch Elemente (9, 11), die die Dichtungsplatte (1) am Gleitstück (10) des Kreuzschlittens, der die Verschiebungen des Behälters parallel zur Achse des hindurchtretenden Arms (5) steuert, fixiert, was die Einwirkung von asymmetrischen Reib- und Druckkräften auf den hindurchtretenden Arm (5) im Bereich der Dichtung (4), die ihn mit der Dichtungsplatte (1) verbindet, aufgrund von Reibkräften zwischen dieser Dichtungsplatte (1) und der Wandung (2), durch die der Arm (5) hindurchtritt, wenn sie sich gegeneinander bewegen, vermeidet.

3. Maschine zum Schneiden mittels Elektroerosion im Tauchbad mittels einer Drahtelektrode, die zwischen zwei Führungsköpfen gespannt ist und abläuft, die jeweils an einem Arm montiert sind, von denen wenigstens einer durch eine Öffnung hindurchtritt, die in einer von Wandungen (2) eines dichten Behälters zur Aufnahme der Arbeitsflüssigkeit angebracht ist, in der der hindurchtretende Arm (5) und das zu bearbeitende Werkstück eingetaucht sind, wobei dieser Behälter und dieser hindurchtretende Arm (5) in bezug zueinander beweglich sind, wobei diese Maschine eine Dichtungsplatte (1) umfaßt, die längs der von dem Arm (5) durchsetzten Wandung (2) verschiebbar ist und die Öffnung abdeckt, die darin angebracht ist, mit einer Durchtrittsöffnung, die diesen Arm (5) durchtreten läßt, versehen und in der wenigstens eine Dichtung (4), die sie mit diesem hindurchtretenden Arm (5) verbindet, angeordnet ist, gekennzeichnet durch ein elastisches Organ (14), das die Dichtungsplatte (1) mit einem Führungssystem (9) verbindet, das die Dichtung(en) (4), die den hindurchtretenden Arm (5) derart umfassen, daß vermieden wird, daß sich die Bewegungen dieser Platte (1) auf dieses System (9) übertragen, einschließt und/oder führt, was die Einwirkung von asymmetrischen Reib- und Druckkräften auf den hindurchtretenden Arm (5) im Bereich der Dichtung (4), die ihn mit der Dichtungsplatte (1) verbindet, aufgrund von Reibkräften zwischen dieser Dichtungsplatte (1) und der Wandung (2), durch die der Arm (5) hindurchtritt, wenn sie sich gegeneinander bewegen, vermeidet.

4. Maschine nach einem der Ansprüche 1 bis 3, dadurch gekennzeichnet, daß wenigstens eine Dichtung (3) zwischen der Dichtungsplatte (1) und der Führungswandung (2) angeordnet ist.

5. Maschine nach einem der Ansprüche 1 bis 3, dadurch gekennzeichnet, daß die Dichtungsplatte (1) mit zwei an der Führungswandung (2) befestigten Gleitführungen in Eingriff steht und ebenso wie letztere derart profiliert ist, daß eine relativ dichte Verbindung mit dieser Wandung (2) sichergestellt ist.

6. Maschine nach Anspruch 1, gekennzeichnet durch eine Hülse (6), die mit dem Arm (59 über eine weiche und dichte Verbindung (16) bestimmt zum Absperren des Raums (7), der zwischen dem Arm (5) und der Hülse (6) vorgesehen ist, gegenüber der in dem Behälter befindlichen Arbeitsflüssigkeit verbunden ist.

7. Maschine nach Anspruch 6, dadurch gekennzeichnet, daß dieser Raum (7) von einem Fluid durchflossen ist, das den hindurchtretenden Arm (5) thermostabilisiert.

8. Maschine nach Anspruch 1, gekennzeichnet durch eine doppelwandige Hülse (6).

9. Maschine nach Anspruch 3, bei der das Führungssystem (9) in starrer Weise mit dem Gleitstück (10) des Kreuzschlittens, der die Verschiebung des Behälters parallel zur Achse des hindurchtretenden Arms (5) steuert, verbunden ist.

10. Maschine nach Anspruch 3, dadurch gekennzeichnet, daß die Dichtung(en) (4) und das Führungssystem (9) in bezug auf den hindurchtretenden Arm (5) fixiert sind.

FIG. 1

FIG. 2

FIG. 3a

FIG. 3 b

FIG. 4 b

FIG. 4 a

FIG. 5a

FIG. 5b

FIG. 5c

FIG. 5d

14

FIG. 5e

FIG. 5f

FIG. 5g

FIG. 5h

FIG.5i

FIG.5j

FIG.5k

FIG.5l